# EUROPEAN PATENT APPLICATION

(11) **EP 3 428 932 A1**
(43) Date of publication of application: **16.01.2019**
(21) Application number: 17180414.9
(22) Date of filing: 10.07.2017
(51) Int. Cl.: H01B 9/02, H01B 7/28, H01B 7/04

(54) **ELECTRICAL POWER CABLE**

(71) Applicant: NKT Cables Group A/S, 2605 Brøndby (DK)
(72) Inventor: HAGMAN, Ingvar, 777 94 Söderbärke (SE); GATU, Anders Jonas, 795 95 Vikarbyn (SE); Ängsås, Åsa, 791 74 Falun (SE); Bringsell, Håkan, 791 62 Falun (SE)
(74) Representative: Kransell & Wennborg KB

(57) **Abstract**

Herein an electric power cable (2) for AC power distribution at up to 3 kV voltage, is disclosed. The electric power cable comprises at least two phase conductors (4, 6, 8) and one neutral conductor (10) only, a shield foil (14), and an electrically insulating outer sheath (16). The neutral conductor (10) comprises an outer conductive polymer or rubber layer (24). A conductive core (22) of the neutral conductor (10) is in electrically conductive contact with the shield foil (14) along substantially an entire length (L) of the electric power cable (2), via the conductive polymer or rubber layer (24) only. The conductive polymer or rubber layer (24) has a volume resistivity ρ below 30 Ωcm.

## Description

### TECHNICAL FIELD

The invention relates to an electric power cable for AC power distribution at up to 3 kV voltage.

### BACKGROUND

Electric power cables are utilised in various different electric power distribution applications. Electric power cables which are used in environments where humans or animals may come in contact with the power cable have to fulfil certain safety requirements. For an electric power cable to be considered "touch safe", the power cable needs to have an electrically conductive shield and a neutral conductor, which both, in use of the power cable, are connected to ground potential via the neutral conductor.

US 3817783 discloses an electric conductor with an insulating covering of a polymeric composition. One embodiment relates to a power cable comprising three solid aluminium power conductors, each insulated with an extruded layer of a nonconductive crystalline propylene/ethylene copolymer, and a solid aluminium neutral conductor enclosed in a covering of extruded lead. The four conductors are laid up together and are surrounded by one or more layers of helically lapped steel tape and an outer protective sheath of polymeric composition. Since the covering of lead and the steel tape are in contact with each other, galvanic corrosion can deteriorate the electrical contact between the neutral conductor and the shield, in case water or moisture should penetrate the protective sheath. Thus, the cable quality and safety aspects of the cable may be negatively influenced.

US 2007/0199731 discloses a low voltage cable comprising at least one insulated phase conductor, a neutral conductor, and a shield, the shield surrounding the phase conductor and the neutral conductor and being adapted to be connected to a reference potential, a portion of the neutral conductor being in contact with a portion of the shield. The portions of the neutral conductor and the shield in contact consist of a material based on the same electrically conductive metal. It is proposed that the shield is of a metallic material covered with a layer of zinc and the neutral conductor is of aluminium covered with a layer of zinc. This avoids the risk of corrosion of these parts and therefore of potential reduction in the quality of the electrical contact otherwise caused by galvanic corrosion that may occur between metals with different electrochemical potentials. However, if the neutral conductor and/or the shield should be damaged, the different metal materials may still cause galvanic corrosion if subjected to an electrolytic solution such as water, or moisture.

### SUMMARY

It is an object of the invention to overcome, or alleviate, at least some of the above mentioned drawbacks. To better address one or more of these concerns, an electric power cable having the features defined in the independent claim is provided.

According to an aspect of the invention, the object is achieved by an electric power cable for AC power distribution at up to 3 kV voltage, the electric power cable having a length and comprising at least two phase conductors and one neutral conductor only arranged together in a bundle, a shield foil extending circumferentially around the bundle along the entire length, and an electrically insulating outer sheath. Each of the at least two phase conductors comprises a conductive core and an outer electrically insulating polymer or rubber layer. The neutral conductor comprises a conductive core. The neutral conductor comprises an outer conductive polymer or rubber layer. The conductive polymer or rubber layer has a volume resistivity (p) below 30 Ωcm. The conductive core of the neutral conductor is in electrically conductive contact with the shield foil along substantially the entire length of the electric power cable, via the conductive polymer or rubber layer only.

Since the neutral conductor comprises an outer conductive polymer or rubber layer, since the conductive polymer or rubber layer has a volume resistivity (p) below 30 Ωcm, and since the conductive core of the neutral conductor is in direct electrical contact with the foil via the conductive polymer or rubber layer along substantially the entire length of the electric power cable, the foil is electrically connected to the neutral conductor via the conductive polymer or rubber layer, and when the cable is connected for AC power distribution, the foil is thus, connected to ground potential. Accordingly, the cable is touch safe in case the insulating outer sheath should be damaged, while the risk of galvanic corrosion between the neutral conductor and the shield foil is eliminated, or at least reduced, in case moisture should penetrate the foil. As a result, the above mentioned object is achieved.

The conductive cores of the phase conductors and the neutral conductor are electrically conductive cores. The outer conductive polymer or rubber layer of the neutral conductor is an electrically conductive layer.

At voltages of up to 3 kV the present electric power cable provides a cost efficient electric power cable construction. The present electric power cable provides a touch safe cable due to the shield foil and the neutral conductor.

Herein, the term "AC power distribution at up to 3kV voltage" relates to AC power distribution at any voltage, suited for a particular application, up to 3 kV, such as e.g. AC power distribution at 690 V, 1 kV, or 3 kV.

According to embodiments, the conductive core of the neutral conductor and the shield foil may comprise the same base metal. In this manner, if the outer conductive polymer or rubber layer should be damaged, galvanic corrosion between the neutral conductor and the foil is prevented.

According to embodiments, the shield foil is wrapped around the at least two phase conductors and the neutral conductor, wherein edges of the shield foil are sealed against each other such that the shield foil provides a water tight layer within the electric power cable. In this manner, the foil may form a seal preventing moisture and water from reaching the phase and neutral conductors.

According to embodiments, each conductive core of the at least two phase conductors and of the one neutral conductor may have a same cross sectional area. In this manner, the one neutral conductor may form a conductor when AC power is distributed via the electric power cable. Namely, depending on the load on the phase conductors, the neutral conductor may have to handle currents within the same range as the phase conductors.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:

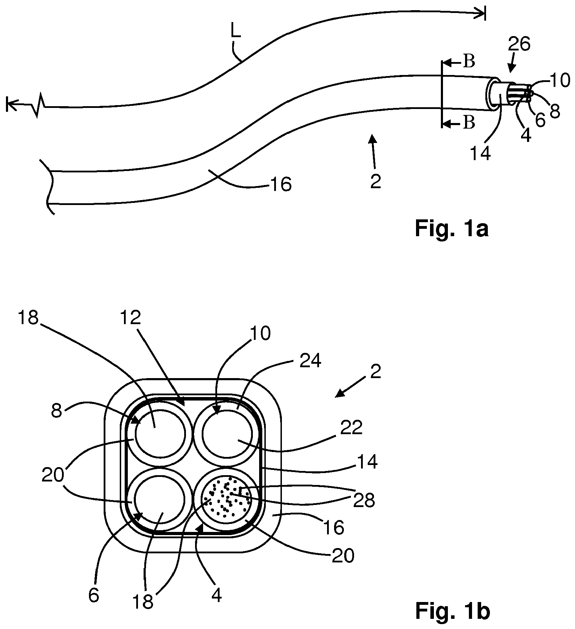

Figs. 1 a and 1 b illustrate an electric power cable according to embodiments.

### DETAILED DESCRIPTION

Aspects and/or embodiments of the invention will now be described more fully. Like numbers refer to like elements throughout. Well-known functions or constructions will not necessarily be described in detail for brevity and/or clarity.

**Figs. 1** **a and 1 b** illustrate an electric power cable 2 according to embodiments. In **Fig. 1** **a** the electric power cable 2 is shown in a side view. In **Fig. 1b** a cross section through the electric power cable 2 along line B - B in **Fig. 1** **a** is shown. The electric power cable 2 is configured for AC power distribution at up to 3kV voltage. The amount of current able to be distributed via the electric power cable 2 depends on the cross sectional area of conductors in the cable. Non-limiting examples of such AC power distribution utilising the electric power cable 2 are:
- As an overhead cable.
- As a buried cable.
- As an underwater cable.
- From a power substation to a fuse box of a residential building.
- For supplying electric power to street lights.
- For supplying electric power to illuminated tracks.

The electric power cable 2 is configured to extend between two connection points. Thus, the electric power cable 2 has a length L. The electric power cable 2 comprises at least two phase conductors 4, 6, 8, and one neutral conductor 10 only. That is, the electric power cable 2 comprises only one neutral conductor 10. In the illustrated embodiments, the at least two phase conductors comprise three phase conductors 4, 6, 8. i.e. the electric power cable 2 comprise three phase conductors 4, 6, 8 and the neutral conductor 10, in total four conductors. In this manner, the electric power cable 2 may be arranged for distributing three-phase AC power.

The phase conductors 4, 6, 8 and the neutral conductor 10 are arranged together in a bundle 12. A shield foil 14 extends circumferentially around the bundle 12 along the entire length L of the electric power cable 2. An electrically insulating outer sheath 16 is arranged around the shield foil 14 and forms the outer layer of the electric power cable 2. In these embodiments, the electrically insulating outer sheath 16 is arranged directly adjacent to the shield foil 14.

Each of the at least two phase conductors 4, 6, 8 comprises a conductive core 18 and an outer electrically insulating polymer or rubber layer 20. The neutral conductor 10 comprises a conductive core 22. The neutral conductor 10 comprises an outer conductive polymer or rubber layer 24. That is, the layer 24 enclosing the neutral conductor 10 may comprise a conductive polymer material or a conductive rubber material. The conductive polymer or rubber layer 24 has a volume resistivity, p, below 30 Ωcm. The conductive core 22 of the neutral conductor 10 is in electrically conductive contact with the shield foil 14 along substantially the entire length L of the electric power cable 2, via the conductive polymer or rubber layer 24. In these embodiments, the conductive polymer or rubber layer 24 is in direct contact with the shield foil 14. According to alternative embodiments, the conductive polymer or rubber layer 24 may be in indirect contact with the shield foil 14, e.g. via a foil arranged between the conductive polymer or rubber layer 24 and the shield foil 14.

According to some embodiments, the conductive polymer 24 may have a volume resistivity within a range of 0.01 - 10 Ωcm. In this manner, a particularly good electrical contact may be provided between the conductive core of the neutral conductor 10 and the shield foil 14 via the conductive polymer 24.

The conductive core of the neutral conductor 10 being in electrically conductive contact with the shield foil 14 along substantially the entire length L of the electric power cable 2 via the conductive polymer or rubber layer 24, means that the conductive core 22 of the neutral conductor 10 is in electrically conductive contact with the shield foil 14 via the conductive polymer or rubber layer 24 along the entire length L of the electric power cable 2, except at ends of the electric power cable 2, where the neutral conductor 10 is connected to electrical equipment during practical use of the electric power cable 2.

If the insulating outer sheath 16 should be damaged, and the outer insulating polymer or rubber layer 20 of one of the phase conductors 4, 6, 8 should also be damaged, the electric power cable 2 will remain touch safe. This, because the damaged phase conductor will be grounded via the neutral conductor 10. The damaged phase conductor and the conductive core 24 of the neutral conductor 10 will be in electrically conductive contact with each other via the conductive polymer or rubber layer 24 and possibly also via the shield foil 14.

Suitably, the conductive core 22 of the neutral conductor 10 and the shield foil 14 may comprise the same base metal. Thus, galvanic corrosion between the neutral conductor 10 and the shield foil 14 may be prevented, in case the outer conductive polymer or rubber layer 24 of the neutral conductor 10 should be damaged and, e.g. moisture or water should pass the shield foil 14 into the inside of the cable 2. Herein the term "base metal" relates to the main metal constituent of the core 22 and the shield foil 14.

According to some embodiments, the base metal may be aluminium. In this manner, a cost efficient electric power cable may be provided. Alternatively, the base metal may be a different metal, such as e.g. copper.

Also the conductive cores 18 of the phase conductors 4, 6, 8 may comprise the same base metal as the conductive core 22 of the neutral conductor 10, such as e.g. aluminium, or copper, as mentioned above.

Suitably, the shield foil 14 is wrapped around the phase conductors 4, 6, 8 and the neutral conductor 10, i.e. around the bundle 12. Edges of the shield foil 14 are sealed against each other such that the shield foil 14 provides a water tight layer within the electric power cable 2. Thus, moisture and water may be prevented from reaching the phase and neutral conductors 4, 6, 8, 10, in case the outer sheath 16 should be damaged. The shield foil 14 prevents radial penetration of water. At the respective ends 26 of the electric power cable 2, access inside the shield foil 14 and to the phase and neutral conductors 4, 6, 8, 10 is provided. However, in practical use of the electric power cable 2, each end 26 is connected to electrical equipment in a dry environment. Thus, moisture and water will not reach the inside of the cable 2 axially from the ends 26 of the cable 2.

The edges of the shield foil 14 may be sealed against each other by folding the edges over each other. Alternatively, or additionally, the edges may be sealed against each other by glue. For instance, a plastic material such as polyethylene may act as a glue.

Each conductive core 18, 22 of the phase conductors 4, 6, 8 and of the neutral conductor 10 has a same cross sectional area. Namely, during AC power distribution at up to 3 kV, the load on the phase conductors 4, 6, 8 may be unevenly allocated between the phase conductors 4, 6, 8. For instance, at the receiver end of the AC power distribution, e.g. in a residential building, an imbalance between the phases may be caused by electric equipment with differing power consumption being connected to the different phases. Thus, the neutral conductor 10, at times, may have to handle currents within the same range as the phase conductors 4, 6, 8.

According to embodiments, the cross sectional area of each conductive core 18, 22 of the at least two phase conductors 4, 6, 8 and of the one neutral conductor 10 may be within a range of 20 - 400 mm2. The cross sectional area is selected for the voltage and current to be handled by the electric power cable 2.

According to embodiments, the electrically insulating polymer or rubber layer 20 of each of the at least two phase conductors 4, 6, 8 may comprise a polyolefin. Mentioned purely as an example, the polyolefin may be a cross-linked polyethylene.

According to embodiments, the conductive polymer or rubber layer 24 may comprise polypropylene, PP, polyethylene, PE, or halogen free fire retardant, HFFR, or EPR, or EPDM. The conductive polymer or rubber layer 24 comprises an additive, such as e.g. carbon black, in an amount sufficient to provide the desired conductivity, namely, the volume resistivity, p, below 30 Ωcm. Mentioned purely as an example, the amount of carbon black may be within a range of 20 - 40 % of weight in PP.

According to embodiments, the conductive polymer or rubber layer 24 may have a radial thickness within a range of 0.1 - 0.8 mm. In this manner, a good electric contact may be provided between the conductive core of the neutral conductor 10 and the shield foil 14 via the conductive polymer.

According to embodiments, each conductive core 18, 22 of the at least two phase conductors 4, 6, 8 and of the neutral conductor 10 may comprise a number of individual strands 28, as indicated in the lower right phase conductor 4 of **Fig. 1** **b.** That is, each of the conductive cores 18, 22 of the phase and neutral conductors 4, 6, 8, 10 may be built up of individual strands. Thus, a flexible electric power cable 2 may be provided.

Alternatively, each conductive core 18, 22 of the at least two phase conductors 4, 6, 8 and of the neutral conductor 10 may comprise one solid conductor only, as indicated e.g. in the lower left phase conductor 6 of **Fig. 1** **b.** For instance, within the lower portion of the above-mentioned cross sectional range of the conductive cores 18, 22, the conductive cores 18, 22 may be formed by solid conductors.

The electrically insulating outer sheath 16 may comprise e.g. thermoplastic polymeric compounds such as polyolefins, polyurethanes, or halogen free fire retardant compounds, and/or rubber compounds such as EPDM and EPR. The outer sheath 16 may comprise one or more layers. If there are more than one layer, the layers may be of different materials. The thickness of the outer sheath 16 may be e.g. 1.4 mm, within a range of 1 - 2 mm, 3 mm, or up to 4 mm.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. An electric power cable (2) for AC power distribution at up to 3 kV voltage, the electric power cable (2) having a length (L) and comprising at least two phase conductors (4, 6, 8) and one neutral conductor (10) only arranged together in a bundle (12), a shield foil (14) extending circumferentially around the bundle (12) along the entire length (L), and an electrically insulating outer sheath (16), wherein
each of the at least two phase conductors (4, 6, 8) comprises a conductive core (18) and an outer electrically insulating polymer or rubber layer (20), and the neutral conductor (10) comprises a conductive core (22),
**characterised in that**
the neutral conductor (10) comprises an outer conductive polymer or rubber layer (24), wherein
the conductive polymer or rubber layer (24) has a volume resistivity (p) below 30 Ωcm, and wherein
the conductive core (22) of the neutral conductor (10) is in electrically conductive contact with the shield foil (14) along substantially the entire length (L) of the electric power cable (2), via the conductive polymer or rubber layer (24) only.

2. The electric power cable (2) according to claim 1, wherein the conductive core (22) of the neutral conductor (10) and the shield foil (14) comprise the same base metal.

3. The electric power cable (2) according to claim 2, wherein the base metal is aluminium.

4. The electric power cable (2) according to any one of the preceding claims, wherein the shield foil (14) is wrapped around the at least two phase conductors (4, 6, 8) and the neutral conductor (10), and wherein edges of the shield foil (14) are sealed against each other such that the shield foil (14) provides a water tight layer within the electric power cable (2).

5. The electric power cable (2) according to any one of the preceding claims, wherein each conductive core (18, 22) of the at least two phase conductors (4, 6, 8) and of the one neutral conductor (10) have a same cross sectional area.

6. The electric power cable (2) according to any one of the preceding claims, wherein a cross sectional area of each conductive core (18, 22) of the at least two phase conductors (4, 6, 8) and of the neutral conductor (10) is within a range of 20 - 400 mm2.

7. The electric power cable (2) according to any one of the preceding claims, wherein the electrically insulating polymer or rubber layer (20) of each of the at least two phase conductors (4, 6, 8) comprises a polyolefin.

8. The electric power cable (2) according to any one of the preceding claims, wherein the conductive polymer or rubber layer (24) comprises polypropylene, PP, polyethylene, PE, or HFFR, or EPR, or EPDM.

9. The electric power cable (2) according to any one of the preceding claims, wherein the conductive polymer or rubber layer (24) has a radial thickness within a range of 0.1 - 0.8 mm.

10. The electric power cable (2) according to any one of the preceding claims, wherein each conductive core (18, 22) of the at least two phase conductors (4, 6, 8) and of the neutral conductor (10) comprises a number of individual strands (28).

11. The electric power cable (2) according to any one of claims 1 - 9, wherein each conductive core (18, 22) of the at least two phase conductors (4, 6, 8) and of the neutral conductor (10) comprises one solid conductor only.

12. The electric power cable (2) according to any one of the preceding claims, wherein the at least two phase conductors (4, 6, 8) comprise three phase conductors (4, 6, 8).
